**Europäisches Patentamt**

**European Patent Office**

**Office européen des brevets**

(19)

(11) Numéro de publication: **0 150 640**
**B1**

(12)

# FASCICULE DE BREVET EUROPEEN

(45) Date de publication du fascicule du brevet:
**01.06.88**

(51) Int. Cl.⁴: **C 08 F 36/18**

(21) Numéro de dépôt: **84402535.3**

(22) Date de dépôt: **10.12.84**

(54) Procédé de polmérisation du chloroprène.

(30) Priorité: **20.12.83 FR 8320342**

(43) Date de publication de la demande:
**07.08.85 Bulletin 85/32**

(45) Mention de la délivrance du brevet:
**01.06.88 Bulletin 88/22**

(84) Etats contractants désignés:
**BE DE FR GB IT NL**

(56) Documents cités:
**DE - A - 2 134 158**
**FR - A - 1 354 575**
**FR - A - 2 073 106**

(73) Titulaire: **DISTUGIL, 45-47, rue de Villiers, F-92200 - Neuilly/sur/Seine (FR)**

(72) Inventeur: **Branlard, Paul, 6, Place Paul Mistral, F-38000 Grenoble (FR)**
Inventeur: **Sauterey, François, Rue de la Tour Champ-sur-Drac, F-38560 Jarrie (FR)**

(74) Mandataire: **Tavernier, Colette, RHONE-POULENC INTERSERVICES Service Brevets Chimie 25, Quai Paul Doumer, F-92408 Courbevoie Cédex (FR)**

## Description

La présente invention a pour objet un procédé de polymérisation du chloroprène ainsi que les polychloroprènes obtenus par le procédé et leur utilisation notamment dans les mélanges adhésifs.

Plus spécifiquement, l'invention a pour objet un procédé de polymérisation du chloroprène en émulsion aqueuse en présence d'agents de transfert de chaines.

Les polychloroprènes sont très utilisés dans les adhésifs aussi bien à l'état de latex qu'en solution dans un solvant. Pour cet emploi, on met en œuvre des polymères de type «sol» c'est-à-dire solubles dans les solvants organiques, dont les viscosités peuvent être variables. Toutefois pour obtenir des adhésifs caractérisés par des forces de cohésion élevées, il est préférable d'avoir des viscosités élevées.

Dans la plupart des cas pour l'usage adhésif, il est nécessaire de soumettre le polymère à une opération de mastication avant sa mise en solution, la mastication ayant pour but de rompre les longues chaines réticulées ou ramifiées qui sont présentes dans le polymère et responsables du comportement élastique du produit. Cette opération est relativement coûteuse. Il était donc intéressant de trouver un procédé de polymérisation permettant d'obtenir directement un caoutchouc ayant les caractéristiques rhéologiques d'un produit standard malaxé.

Une autre norme de qualité importante pour un polychloroprène est sa résistance au vieillissement. D'une façon générale, la viscosité a tendance à augmenter au cours du stockage. Ce phénomène, qui est dû à une réticulation plus ou moins rapide selon les conditions opératoires, est connu sous le terme de vieillissement du polymère. L'augmentation de la viscosité peut s'accompagner ou non de l'apparition de gel ayant pour conséquence une insolubilisation partielle du polychloroprène dans les préparations pour adhésifs et une modification sensible des propriétés physiques et rhéologiques des polymères.

On sait que les acides résiniques qui peuvent être présents dans le système de polymérisation protègent le latex contre le vieillissement. Mais ces acides résiniques sont responsables du phénomène de séparation de phases que l'on observe au bout d'un laps de temps plus ou moins long dans les mélanges adhésifs avec solvants comprenant de la magnésie et des résines phénoliques. Un moyen d'éviter ce phénomène consiste à polymériser le chloroprène en présence de quantités réduites de colophane et d'une quantité modérée d'acides gras (brevet français 2 164 095). Mais dans ces conditions, et surtout lorsque des thiurames sont ajoutés en fin de polymérisation, on note un vieillissement naturel accru du polychloroprène.

Une technique classique permettant d'obtenir des polychloroprènes de type sol consiste à polymériser le chloroprène en présence d'un agent de transfert de chaînes. La viscosité obtenue dépend du type et du taux de l'agent de transfert de chaînes ainsi que du degré de conversion du monomère en polymère. Pour des raisons économiques, il est souhaitable que le taux de conversion soit le plus élevé possible, et de préférence supérieur à 70%.

En n'utilisant qu'un faible taux d'agent de transfert de chaînes tels que le n.dodécylmercaptan (n.DDM), introduit en totalité au début de la polymérisation, il est possible d'obtenir des polychloroprènes de haute viscosité. Mais le polymère qui en résulte présente une structure partiellement réticulée se traduisant par une phase «gel» rendant partiellement insoluble le polymère dans ses propres solvants. Le gel apparaît d'autant plus rapidement que la conversion finale est plus élevée.

Un moyen bien connu dans la technique de polymérisation en émulsion pour réduire le poids moléculaire moyen d'un polymère à une conversion donnée consiste à ajouter le modifiant incrémentalement ou en continu tout au long de la polymérisation. Un perfectionnement à ce moyen général a été proposé dans le brevet allemand PS 20 60 659. On ne parvient cependant pas par cette technique à éviter l'absence totale de gel dans un latex de polychloroprène de viscosité en solution élevée, notamment après vieillissement du latex et lorsque le taux de conversion est supérieur à environ 70%.

Par viscosité élevée, on entend selon la présente description des viscosités Brookfield au moins égales à environ 2500 mPa.s, mesurées à 23 °C en solution à 10% dans le toluène.

La présente invention a pour but principal de fournir un procédé de préparation de polychloroprène permettant de régler la viscosité du polymère dans un domaine large sans formation de gel tout en conduisant la polymérisation jusqu'à un degré de conversion acceptable industriellement.

Un autre but que vise l'invention est de disposer d'un polychloroprène «sol» de viscosité élevée, exempt de gel ou de longues chaînes réticulées susceptibles de conduire à la formation de gel.

L'invention a encore pour but d'obtenir un polychloroprène pour emploi dans les mélanges adhésifs avec solvant, ayant une viscosité élevée, un bon vieillissement naturel, un comportement rhéologique amélioré et ne conduisant par au phénomène de séparation de phases.

Il a été trouvé conformément à la présente invention qu'en combinant l'action de deux agents de transfert de chaînes ayant des réactivités différentes il est possible d'obtenir un polymère de viscosité élevée en solution, sans formation de gel, associé à un comportement rhéologique amélioré par rapport à la technique antérieure utilisant un seul agent de transfert de chaîne et pour un même degré de conversion du monomère en polymère.

L'activité d'un agent de transfert de chaînes peut être mesurée par sa vitesse de réaction relative par rapport à la vitesse de polymérisation du ou des monomères à polymériser.

Selon l'invention le procédé consiste à polymériser le chloroprène ou un mélange de chloroprène et de jusqu'à 20% en poids d'un monomère copolymérisable en émulsion aqueuse alcaline et en présence d'un agent de transfert de chaînes, et est caractérisé en ce que l'on ajoute à l'initiation de la polymérisation un agent de transfert de chaînes ayant une vitesse de réaction relative supérieure à celle du chloroprène puis on ajoute incrémentalement ou en continu au cours de la polymérisation un autre agent de transfert dont la vitesse de réaction relative est sensiblement égale à celle du chloroprène.

La combinaison de ces deux agents de transfert selon l'invention a pour résultat d'empêcher, tout au long de la polymérisation la formation de masses moléculaires trop élevées et par conséquent trop ramifiées. Ce résultat ne pouvait être atteint par l'emploi d'un seul agent de transfert selon la technique antérieure.

Les agents de transfert de chaînes utilisables selon l'invention peuvent, de manière générale, être sélectionnés parmi les régulateurs de poids moléculaire connus dans la technique de polymérisation du chloroprène, après en avoir déterminé la réactivité.

Parmi les agents de transfert présentant une vitesse de réaction relative élevée par rapport à celle du chloroprène ci-après désignés par Agents de transfert X on peut citer plus particulièrement les composés de formule R–Cl$_3$ dans laquelle R représente l'hydrogène ou un groupe alkyl contenant 1 à 3 atomes de carbone. On utilise préférentiellement le iodoforme.

Comme agent de transfert présentant une vitesse de réaction relative sensiblement égale à celle du chloroprène ci-après désigné par agent de transfert Y on peut citer en particulier les mercaptans aliphatiques contenant 8 à 18 atomes de carbone, à chaine droite ou ramifiée, tels que le n.octylmercaptan, le n.dodécylmercaptan, l'iso-dodécylmercaptan. Le. n.dodécylmercaptan est utilisé préférentiellement en raison de sa disponibilité commerciale. On peut également utiliser des disulfures aromatiques tels que le disulfure de benzanilide.

Les agents de transfert X et Y peuvent être introduits dans le milieu réactionnel sous forme de solution, d'émulsions, ou à l'état pur.

Le degré de conversion du ou des monomère(s), les quantités des agents de transfert de chaînes et la température de polymérisation sont des paramètres importants du procédé selon l'invention.

La quantité de l'agent de transfert X que l'on ajoute à l'initiation de la polymérisation est comprise entre 50 et 700 ppm, exprimée en poids de iodoforme par rapport au poids de chloroprène chargé.

La quantité totale de l'agent de transfert Y, est fonction du degré de conversion du chloroprène et de la température de polymérisation. De manière générale, elle peut être comprise entre 10 et 70 ppm exprimée en poids de n.dodécylmercaptan (n.DDM) par pourcentage de conversion du monomère avec une vitesse d'introduction constante de l'agent de transfert Y. La température de polymérisation θ est comprise entre 5 et 50 °C. Dans cet intervalle, et sous réserve que les taux de X et Y soient compris dans l'intervalle ci-dessus indiqué, la quantité totale minimale de l'agent Y est calculée à l'aide de l'équation:

Y (ppm/% conversion) > 14+1,9 θ − 0,08 X − 0,0014 Xθ

Il peut être avantageux d'introduire l'agent de transfert Y avec une vitesse variable et généralement croissante.

L'accroissement de la vitesse d'introduction en fonction de la conversion du monomère peut être linéaire ou non linéaire à partir d'un certain taux de conversion du monomère de manière à modifier la répartition des masses moléculaires du polymère. Dans ce cas, la quantité totale de Y peut être comprise entre 10 et 300 ppm, exprimée en poids de n.DDM par pourcentage de conversion du monomère.

Si l'on utilise un agent de transfert X et Y autre que l'iodoforme et le n.DDM, les quantités sont calculées par un simple rapport de poids moléculaire.

L'agent de transfert Y peut être ajouté incrémentalement ou en continu. Quelle que soit la méthode utilisée, on doit veiller à ce que la quantité introduite soit toujours comprise dans les limites ci-dessus indiquées en fonction du degré de conversion. En procédant de cette manière, la conversion finale du monomère en polymère peut atteindre 90% pour les basses températures de polymérisation et 80% pour les plus élevées.

Dans une variante du procédé, il est possible d'ajouter au cours de la polymérisation en addition à l'agent Y, et de préférence après 50% de conversion du chloroprène, un agent de transfert dont la vitesse de réaction relative est supérieure à celle du chloroprène. Cet agent peut être identique ou différent de l'agent de transfert introduit à l'initiation de la polymérisation.

A l'exception du perfectionnement selon l'invention, la polymérisation est effectuée au moyen des techniques courantes de polymérisation en émulsion alcaline du chloroprène en présence d'un agent de transfert de chaînes.

Le chloroprène peut être copolymérisé avec un autre monomère possédant au moins une double liaison éthylénique.

Parmi les monomères copolymérisables avec le chloroprène, on peut citer les composés vinylaromatiques comme le styrène, les vinyltoluènes, et vinylnaphtalènes, les acides acryliques méthacryliques ainsi que leurs dérivés esters et nitriles comme l'acrylate d'éthyle, le méthacrylate de méthyle et l'acrylonitrile, les dioléfines conjuguées aliphatiques comme le 1,3-butadiène, l'isoprène, le 1-chlorobutadiène, le 2,3-dichlorobutadiène et le 2,3-diméthylbutadiène, les éthers et cétones vinyliques comme l'éther méthylvinylique, l'acétate de vinyle et la méthylvinyl-cétone.

La polymérisation est effectuée en émulsion aqueuse en utilisant les catalyseurs classiques générateurs de radicaux libres. On peut mentionner notamment les composés peroxydes comme les persulfates de métaux alcalins ou d'ammonium, l'eau oxygénée, le peroxyde de cumène, le peroxyde de benzoyle ainsi que les ferricyanures de métaux alcalins et d'ammonium.

La concentration en monomère présent dans l'émulsion aqueuse n'est pas critique: elle est comprise généralement entre 30 et 60% du poids total de l'émulsion.

La polymérisation est effectuée en atmosphère inerte en l'absence d'oxygène.

Le pH de l'émulsion est compris entre 11 et 13.

Tous les agents émulsionnants et colloïdes protecteurs conventionnels peuvent être utilisés pour préparer l'émulsion du chloroprène. Parmi ces agents, on peut citer les sels solubles dans l'eau; particulièrement les sels de sodium, potassium ou ammonium des composés suivants: acides gras à longue chaîne, colophane ou dérivés de la colophane de gemme, de bois, de tall-oil, la colophane partiellement polymérisée, isomérisée ou dismutée; les sulfates d'alcools gras, les alkyl sulfates et alkyl sulfonates; les sels alcalins des acides alkyl aryl sulfoniques ainsi que des produits de condensation du formol avec les acides aryl sulfoniques comme l'acide naphtalène sulfonique, et des condensats d'oxyde d'éthylène et de phénols.

Pour la préparation de polychloroprène à usage adhésifs avec solvants, on préfère tout particulièrement un système émulsifiant dont la composition en poids par rapport au chloroprène est de 1,8 à 3% de dérivés résiniques et 0,1 à 1% d'acide gras saturé ou insaturé (brevet français 2 164 095 et brevet américain 3 872 043).

La polymérisation peut être arrêtée à n'importe quel moment par addition d'inhibiteurs de polymérisation conventionnels, le taux de conversion étant le plus élevé possible et de préférence au moins égal à 70%.

On peut également introduire dans le latex, au moment de l'arrêt de la polymérisation, des composés antioxygènes conventionnels tels que le ditertiobutylparacrésol, le 2,2'-méthylène bis (6-t-butyl-p-crésol), le 2,2'-thiobis (4,6-di-t-butyl phénol), le 2,6-di-t-butyl-4-phényl phénol.

Le polychloroprène peut être isolé du latex d'une façon connue quelconque par exemple par coagulation sur tambour froid ou sur tambour chauffé à la vapeur, lavage et séchage.

Le procédé selon l'invention permet d'obtenir, avec un haut degré de conversion des polychloroprènes sol ayant des forces de cohésion élevées et un comportement rhéologique exceptionnellement satisfaisant. Ils possèdent une bonne résistance au vieillissement même en l'absence d'agents protecteurs contre le vieillissement. Ils sont particulièrement aptes à être utilisés comme polymère de base pour la préparation de colles et adhésifs sans qu'il soit nécessaire de procéder à une mastication préliminaire. Les exemples suivants illustrent l'invention.

Exemple 1:

| On charge dans un récipient de polymérisation: | |
|---|---|
| – Chloroprène | 100 parties en poids |
| – Eau | 100 parties en poids |
| – Acide résinique: Colophane dismutée (marque déposée Phèdre V de la Société Passicos) | 2 parties en poids |
| – Oléate de sodium | 0,4 parties en poids |
| – Soude (100%) | 0,46 parties en poids |
| – Sel de sodium d'acides méthylène-bis-alkyl-naphtalène sulfoniques (Distabex LS, marque déposée de la Cie Française des Matières Colorantes) | 0,875 parties en poids |
| – Iodoforme | 0,0275 parties en poids |
| avec un catalyseur initial composé de: | |
| A) Sulfate ferreux (7 H$_2$O) | 0,00384 parties en poids |
| Sel disodique de l'acide éthylène diamine tétracétique (Masouol B, marque déposée de la Sté PROTEX | 0,00577 parties en poids |
| Soude | 0,00124 parties en poids |
| Eau | 1,026 parties en poids |
| B Dithionite de sodium | 0,0294 parties en poids |
| Eau | 0,588 parties en poids |

La polymérisation est conduite en 10 heures à +10 °C en réglant un débit convenable de solution aqueuse de persulfate d'ammonium.

Immédiatement après le démarrage de la polymérisation, on ajoute en continu 20 ppm de n.dodécylmercaptan par pour-cent de conversion du monomère en polymère.

La polymérisation est arrêtée à une conversion de 80% par le mélange:

| | | |
|---|---|---|
| – Chloroprène | 0,8 | parties en poids |
| – Lauryl sulfate de sodium | 0,02 | parties en poids |
| – Phénothiazine | 0,01 | parties en poids |
| – Eau | 2,93 | parties en poids |

On ajoute enfin 0,4 p. de ditertiobutyle paracrésol en solution dans le chloroprène (2,93 p.) dans le latex.

L'entraînement à la vapeur et l'isolation du latex sont effectués suivant les méthodes habituellement utilisées pour le polychloroprène. En particulier, l'isolation se fait par coagulation du latex amené à pH 6,5 sur un tambour refroidi à −20 °C. Le film obtenu est lavé puis séché.

Sur le polychloroprène obtenu, on mesure la viscosité, le comportement rhéologique et la présence de gel.

Viscosité: Brookfield, modèle LVT – 23 °C – Solution à 10% en poids dans le toluène.

Comportement rhéologique: Mesure de l'effet Weissenberg (A continuum Theory of rheological phenomena – K. Weissenberg – Nature – Mars 1, 1947 – Vol. 159 – p. 310–311).

On dissout le polychloroprène dans du toluène de manière à obtenir une viscosité de 5000 mPa.s.

Une tige cylindrique graduée en millimètres, dont une des extrémités est terminée par un cône, est plongée dans le liquide, de sorte que le niveau de ce dernier soit à la graduation «O». Lors de la rotation de la tige (300 t/min), le liquide viscoélastique remonte le long de la tige. La hauteur atteinte, exprimée en mm, après 30 secondes de rotation appelée «Remontée Weissenberg», est proportionnelle à la force perpendiculaire aux contraintes de cisaillement qui s'exerce (force normale).

Température de l'essai: 23 °C.

La remontée Weissenberg caractérise l'élasticité de la solution de polymère et son aptitude à la brossabilité de sorte que plus elle est faible, plus le comportement rhéologique est amélioré.

Présence de gel

50 mg de polychloroprène sont dissous dans 20 ml de tétrahydrofurane sous agitation pendant 2 heures à l'aide d'un agitateur vibrant.

La solution est filtrée sur filtre Teflon de 0,45 µm.

Si la solution passe entièrement à travers le filtre, le polychloroprène est considéré comme exempt de gel (−).

Le polychloroprène obtenu selon cet exemple présente une viscosité de 4,500 mPa.s, un effet Weissenberg de 40 mm. On n'observe aucun gel dans le polymère initial ni après vieillissement de trois jours à 70 °C.

Exemples 2 à 16

On exécute la polymérisation de la même manière que dans l'exemple 1 en faisant varier la température de polymérisation, les quantités de iodoforme et de n.dodecylmercaptan.

Les taux de iodoforme sont exprimés en parties en poids de iodoforme par rapport au poids de chloroprène chargé.

Les taux de n.DDM sont exprimés en parties en poids de n.dodecylmercaptan par rapport au poids de chloroprène chargé et par % de conversion.

Les résultats sont donnés dans le Tableau I.

Exemples comparatifs A à G

On effectue la polymérisation comme dans l'exemple 1 à la différence qu'on supprime le iodoforme et qu'on introduit à la différence qu'on supprime le iodoforme et qu'on introduit à la place des quantités variables de n DDM dans la charge initiale. Dans ces exemples, on n'effectue aucune addition supplémentaire de n DDM au cours de la réaction. La polymérisation est arrêtée lorsque le taux de conversion atteint 80%.

Les résultats figurent dans le Tableau II.

On constate pour des viscosités égales ou supérieures à 1,100 mPa.s la présence de faibles quantités de gel (+) dans le polymère initial, un mauvais vieillissement du polymère et un effet Weissenberg important.

Exemples comparatifs H à N

On effectue la polymérisation selon l'exemple 1 mais on remplace l'iodoforme par des quantités variables de n.DDM et l'on ajoute en continu au cours de la polymérisation d'autres quantités de n DDM. La polymérisation est arrêtée lorsque le taux de conversion atteint 80%.

Les résultats figurent dans le Tableau III.

On constate une amélioration par rapport aux essais A à G pour un faible taux initial de n DDM. Toutefois, le gel apparaît rapidement au cours du vieillissement pour une viscosité d'environ 2 000 m Pa.s (essai J).

Exemple 17

On exécute la polymérisation de la même manière que dans l'exemple 1 mais l'on fait varier le taux de n.DDM en fonction de la conversion du monomère selon le schéma suivant:

| % conversion du chloroprène | | n.DDM ppm/% conversion |
|---|---|---|
| entre | 0 et 40 | 25 |
| | 40 et 50 | 30 |
| | 50 et 60 | 35 |
| | 60 et 65 | 45 |
| | 65 et 70 | 60 |
| | 70 et 75 | 100 |
| | 75 et 80 | 140 |
| | 80 et 85 | 200 |

La polymérisation est stoppée à 85% de conversion.

Le polychloroprène obtenu a une viscosité de 800 mPa.s (solution à 10% dans toluène), un effet Weissenberg de 10 mm. Le polymère initial et après vieillissement de 3 jours à 70 °C est exempt de gel.

Exemple 18

On exécute la polymérisation de la même manière que dans l'exemple 1, à l'exception que la température de polymérisation est de 30 °C et la quantité de iodoforme initial est de 0,0400 parties en poids. On fait varier le taux de n.DDM en fonction de la conversion selon le schéma suivant:

| % conversion du chloroprène | | n.DDM ppm/% conversion |
|---|---|---|
| entre | 0 et 40 | 20 |
| | 40 et 50 | 30 |
| | 50 et 60 | 50 |
| | 60 et 65 | 80 |
| | 65 et 70 | 130 |
| | 70 et 75 | 200 |
| | 75 et 80 | 300 |

La polymérisation est stoppée à 80% de conversion.

La viscosité du polychloroprène obtenu est de 950 mPa.s et son effet Weissenberg de 25 mm.

On ne détecte aucun gel dans le polymère initial ni après vieillissement 3 jours à 70 °C.

Exemple 19

On exécute la polymérisation de manière identique à l'exemple 1, à une température de 10 °C.

La quantité de iodoforme chargé initialement est de 0,0250 parties en poids.

Après le démarrage de la polymérisation, on ajoute en continu du n.DDM, puis un mélange de n.DDM et de iodoforme, selon le schéma suivant:

| % conversion du chloroprène | | Agents de transfert ppm/% conversion | |
|---|---|---|---|
| | | n.DDM | iodoforme |
| entre | 0 et 50 | 25 | 0 |
| | 50 et 60 | 25 | 10 |
| | 60 et 70 | 25 | 20 |
| | 70 et 80 | 25 | 30 |
| | 80 et 85 | 25 | 40 |

La polymérisation est stoppée à 85% de conversion.

| | |
|---|---|
| Viscosité du polychloroprène | 670 mPa.s |
| Effet Weissenberg | 10 mm |
| Gel | néant |

Tableau I

| Ex. | θ (°C) | Conversion C% | Taux iodoforme (ppm) (X) | Taux n-DDM (ppm/% conv.) (Y) | Viscosité mPa.s | Effet Weissenberg pour 5000 mPa.s (mm) | Présence de gel initial/ap. 3 J à 70 °C | |
|---|---|---|---|---|---|---|---|---|
| 1 | 10 | 80 | 275 | 20 | 4500 | 40 | – | – |
| 2 | 10 | 80 | 50 | 30 | 3800 | 60 | – | – |
| 3 | 10 | 80 | 50 | 40 | 1600 | 30 | – | – |
| 4 | 10 | 80 | 100 | 30 | 3750 | 35 | – | – |
| 5 | 10 | 80 | 100 | 40 | 1000 | 20 | – | – |
| 6 | 10 | 80 | 150 | 40 | 600 | 10 | – | – |
| 7 | 10 | 80 | 200 | 30 | 1800 | 20 | – | – |
| 8 | 10 | 80 | 300 | 20 | 2600 | 25 | – | – |
| 9 | 30 | 80 | 200 | 55 | 1700 | 35 | – | – |
| 10 | 30 | 80 | 250 | 45 | 2500 | 40 | – | – |
| 11 | 45 | 80 | 500 | 50 | 450 | 30 | – | – |
| 12 | 45 | 80 | 350 | 65 | 900 | 45 | – | – |
| 13 | 45 | 80 | 400 | 50 | 1000 | 40 | – | – |
| 14 | 10 | 75 | 300 | 20 | 2500 | 20 | – | – |
| 15 | 10 | 70 | 300 | 20 | 2300 | 15 | – | – |
| 16 | 10 | 85 | 300 | 20 | 3900 | 45 | – | – |

TABLEAU II

L'agent modifiant n DDM est introduit intégralement avant la polymérisation.

| Ex. | O (°C) | Taux n-DDM (ppm) | Viscosité mPa.s | Effet Weissenberg pour 5000 mPa.s (mm) | Présence de gel initial/ap. 3 J à 70 °C | |
|-----|--------|------------------|-----------------|----------------------------------------|------------------------------------------|---|
| A | 10 | 1400 | 450 | 20 | − | − |
| B | 10 | 1100 | 1500 | 55 | (+) | + |
| C | 10 | 900 | 3900 | 70 | + | + |
| D | 25 | 1400 | 850 | 30 | − | − |
| E | 35 | 1450 | 1400 | 55 | (+) | + |
| F | 40 | 1350 | 1500 | 65 | + | + |
| G | 45 | 1800 | 1100 | 65 | (+) | + |

TABLEAU III

Une partie de l'agent modifiant n DDM est introduite au chargement et l'autre partie en continu durant la polymérisation

| Ex. | O (°C) | Taux n-DDM initial (ppm) | continu (ppm/% conv.) | Viscosité mPa.s (23 °C) | Effet Weissenberg pour 5000 mPa.s (mm) | Présence de gel initial/ap. 3 J à 70 °C | |
|-----|--------|--------------------------|-----------------------|-------------------------|-----------------------------------------|------------------------------------------|---|
| H | 10 | 400 | 30 | 500 | 20 | − | − |
| I | 10 | 650 | 14 | 1100 | 25 | − | − |
| J | 10 | 500 | 14 | 1850 | 45 | − | + |
| K | 10 | 130 | 30 | 4400 | 55 | (+) | + |
| L | 30 | 800 | 30 | 1500 | 45 | (+) | + |
| M | 40 | 1000 | 30 | 1200 | 50 | (+) | + |
| N | 34 | 1300 | 30 | 1650 | 60 | + | + |

## Revendications

1. Procédé de polymérisation du chloroprène ou d'un mélange de chloroprène et de jusqu'à 20% en poids d'un monomère copolymérisable en émulsion aqueuse alcaline en présence d'agents émulsifiants et d'un agent de transfert de chaînes à une température $\emptyset$ comprise entre 5 et 50 °C, suivi de l'isolation du polymère formé caractérisé en ce que l'on ajoute à l'initiation de la polymérisation un agent de transfert de chaînes X ayant une vitesse de réaction relative supérieure à celle du chloroprène, puis on ajoute incrémentalement ou en continu au cours de la polymérisation un autre agent de transfert Y dont la vitesse de réaction relative est sensiblement égale à celle du chloroprène.

2. Procédé selon la revendication 1 caractérisé en ce que l'agent de transfert X est un composé de formule R–CI$_3$ dans laquelle R représente l'hydrogène ou un radical alkyle en C$_1$–C$_3$.

3. Procédé selon la revendication 2 dans lequel l'agent de transfert est l'iodoforme.

4. Procédé selon l'une des revendications 1 à 3 caractérisé en ce que l'agent de transfert Y est choisi dans le groupe formé par les alkylmercaptans contenant 8 à 18 atomes de carbone à chaine droite ou ramifiée et les disulfures aromatiques.

5. Procédé selon la revendication 4 dans lequel l'agent de transfert est le n.dodecylmercaptan.

6. Procédé selon la revendication 4 dans lequel l'agent de transfert est le disulfure de benzanilide.

7. Procédé selon l'une des revendications 1 à 6 caractérisé en ce que la quantité de l'agent de transfert X est comprise entre 50 et 700 ppm, exprimée en poids d'iodoforme par rapport au poids de chloroprène et la quantité de l'agent de transfert Y est comprise entre 10 et 70 ppm exprimée en poids de n-dodécylmercaptan par rapport au poids de chloroprène chargé et par pourcentage de conversion du monomère en polymère avec une vitesse d'introduction constante de l'agent de transfert Y.

8. Procédé selon l'une des revendications 1 à 6 caractérisé en ce que la quantité de l'agent de transfert X est comprise entre 50 et 700 ppm, exprimée en poids d'iodoforme par rapport au poids de chloroprène et la quantité de l'agent de transfert Y est comprise entre 10 et 300 ppm exprimée en poids de n-dodécylmercaptan par rapport au poids de chloroprène chargé et par pourcentage de conversion du monomère en polymère avec une vitesse d'introduction croissante de l'agent de transfert Y.

9. Procédé selon l'une des revendications 1 à 8 caractérisé en ce que l'on introduit au cours de la polymérisation, en addition à l'agent de transfert Y, un agent de transfert dont la vitesse de réaction relative est supérieure à celle du chloroprène.

10. Procédé selon l'une des revendications 1 à 8 caractérisé en ce que la quantité minimale totale de l'agent de transfert Y est calculée par l'équation:

$$Y \text{ (ppm/\% conversion)} > 14 + 1,9 \; \emptyset - 0,08 \; X - 0,0014 \, X \, \emptyset$$

11. Procédé selon l'une des revendications 1 à 10 caractérisé en ce que le système émulsifiant comprend 1,8 à 3% en poids de dérivés résiniques et 0,1 à 1% en poids d'acides gras saturés et/ou insaturés ou leurs sels alcalins, par rapport au chloroprène.

12. Latex de polychloroprène et caoutchoucs de polychloroprène susceptibles d'être obtenus par le procédé selon l'une des revendications 1 à 11.

13. Utilisation des latex et caoutchoucs de polychloroprène obtenus selon l'une des revendications 1 à 11 pour la préparation de mélanges adhésifs.

## Patentansprüche

1. Verfahren zur Polymerisation von Chloropren oder eines Gemisches aus Chloropren mit bis zu 20 Gew.-% eines copolymerisierbaren Monomeren in wässrig-alkalischer Emulsion in Gegenwart von Emulgiermitteln und eines Kettenübertragungsmittels bei einer Temperatur $\emptyset$ zwischen 5 und 50 °C und anschliessende Isolierung des entstandenen Polymers, dadurch gekennzeichnet, dass man zu Beginn der Polymerisation ein Kettenübertragungsmittel X zusetzt mit einer relativen Reaktionsgeschwindigkeit, die höher ist als diejenige von Chlopren, anschliessend in einzelnen Anteilen oder kontinuierlich während der Polymerisation ein anderes Übertragungsmittel Y zugibt, dessen relative Reaktionsgeschwindigkeit im wesentlichen gleich ist derjenigen von Chloropren.

2. Verfahren nach Anspruch 1, dadurch gekennzeichnet, dass das Übertragungsmittel X eine Verbindung der Formel $R-CI_3$ ist, in der R ein Wasserstoffatom oder einen $C_{1-3}$-Alkylrest bedeutet.

3. Verfahren nach Anspruch 2, wobei das Übertragungsmittel Iodoform ist.

4. Verfahren nach einem der Ansprüche 1 bis 3, dadurch gekennzeichnet, dass das Übertragungsmittel Y ausgewählt ist aus der Gruppe der Alkylmercaptane mit einer graden oder verzweigten (Alkyl)kette mit 8 bis 18 Kohlenstoffatomen und der aromatischen Disulfidverbindungen.

5. Verfahren nach Anspruch 4, wobei das Übertragungsmittel n-Dodecylmercaptan ist.

6. Verfahren nach Anspruch 4, wobei das Übertragungsmittel Benzanilid-disulfid ist.

7. Verfahren nach einem der Ansprüche 1 bis 6, dadurch gekennzeichnet, dass die Menge an Übertragungsmittel X 50 bis 700 ppm beträgt, angegeben als Gewicht Iodoform, bezogen auf das Gewicht des Chloprens, und die Menge an Übertragungsmittel Y 10 bis 70 ppm beträgt, angegeben als Gewicht n-Dodecylmercaptan, bezogen auf das Gewicht des eingesetzten Chloprens und je Prozent der Umwandlung des Monomers bei einer konstanten Einleitgeschwindigkeit des Übertragungsmittels Y.

8. Verfahren nach einem der Ansprüche 1 bis 6, dadurch gekennzeichnet, dass die Menge an Übertragungsmittel X 50 bis 700 ppm beträgt, angegeben als Gewicht Iodoform bezogen auf das Gewicht des Chloprens und die Menge an Übertragungsmittel Y 10 bis 300 ppm beträgt, angegeben als Gewicht des n-Dodecylmercaptans, bezogen auf das Gewicht des eingesetzten Chloprens und je Prozent der Umwandlung des Monomers in das Polymer bei zunehmender Einleitgeschwindigkeit des Übertragungsmittels Y.

9. Verfahren nach einem der Ansprüche 1 bis 8, dadurch gekennzeichnet, dass man im Laufe der Polymerisation neben dem Übertragungsmittel Y ein Übertragungsmittel zuführt, dessen relative Reaktionsgeschwindigkeit höher ist als diejenige von Chlopren.

10. Verfahren nach einem der Ansprüche 1 bis 8, dadurch gekennzeichnet, dass die minimale Gesamtmenge an Übertragungsmittel Y berechnet wird nach der Gleichung:

$$Y \text{ (ppm/\% Umwandlung)} > 14 + 1,9 \; \emptyset - 0,08 \; X - 0,0014 \, X \, \emptyset$$

11. Verfahren nach einem der Ansprüche 1 bis 10, dadurch gekennzeichnet, dass das Emulgiersystem 1,8 bis 3 Gew.-% Harzderivate und 0,1 bis 1 Gew.-% gesättigte und/oder ungesättigte Fettsäuren oder deren Alkalisalze, bezogen auf das Chloropren, enthält.

12. Polychloroprenlatex und Polychloroprenkautschuke, die erhalten werden können nach dem Verfahren nach einem der Ansprüche 1 bis 11.

13. Verwendung des Polychloroprenlatex und Polychloroprenkautschuke nach einem der Ansprüche 1 bis 11 zur Herstellung von Klebemittelgemischen.

## Claims

1. Process for the polymerization of chloroprene or of a mixture of chloroprene and upto 20% by weight of a monomer which can be copolymerized in an alkaline aqueous emulsion in the presence of emulsifiers and of a chain transfer agent at a temperature $\emptyset$ of between 5 and 50 °C, followed by the isolation of the polymer formed, characterized in that when the polymerization is initiated, a chain transfer agent X having a relative reaction rate higher than that of chloroprene is added and then, during the polymerization, another transfer agent Y, the relative reaction rate of which is substantially equal to that of chloroprene, is added in increments or continuously.

2. Process according to Claim 1, characterized in that the transfer agent X is a compound of formula $R-Cl_3$ in which R represents hydrogen or a $C_1-C_3$ alkyl radical.

3. Process according to Claim 2, in which the transfer agent is iodoform.

4. Process according to one of Claims 1 to 3, characterized in that the transfer agent Y is chosen from the group consisting of straight-chain or branched alkylmercaptans containing 8 to 18 carbon atoms and aromatic disulphides.

5. Process according to Claim 4, 4, in which the transfer agent is n-dodecylmercaptan.

6. Process according to Claim 4, in which the transfer agent is benzanilide disulphide.

7. Process according to one of Claims 1 to 6, characterized in that the quantity of transfer agent X is between 50 and 700 ppm, expressed as weight of iodoform relative to the weight of chloroprene and the quantity of transfer agent Y is between 10 and 70 ppm expressed as weight of n-dodecylmercaptan relative to the weight of chloroprene charged and per percentage conversion of the monomer into polymer, with a constant of rate of introduction of the transfer agent Y.

8. Process according to one of Claims 1 to 6, characterized in that the quantity of transfer agent X is between 50 and 700 ppm, expressed as weight of iodoform relative to the weight of chloroprene and the quantity of transfer agent Y is between 10 and 300 ppm expressed as weight of n-dodecylmercaptan relative to the weight of chloroprene charged and per percentage conversion of the monomer into polymer, with an increasing rate of introduction of the transfer agent Y.

9. Process according to one of Claims 1 to 8, characterized in that during the polymerization, in addition to the transfer agent Y, a transfer agent having a relative reaction rate higher than that of chloroprene is introduced.

10. Process according to one of Claims 1 to 8, characterized in that the total minimum quantity of transfer agent Y is calculated by the equation:
Y (ppm/% conversion) > $14+1,9$ $\emptyset-0.08$ X$-0,0014$ X $\emptyset$

11. Process according to one of Claims 1 to 10, characterized in that the emulsifying system comprises 1.8 to 3% by weight of resin derivatives and 0,1 to 1% by weight of saturated and/or unsaturated fatty acids or their alkali metal salts, relative to chloroprene.

12. Polychloroprene latices and polychloroprene rubbers which can be obtained by the process according to one of Claims 1 to 11.

13. Use of polychloroprene latices and rubbers obtained according to one of Claims 1 to 11 for the preparation of adhesive mixtures.